# EUROPEAN PATENT APPLICATION

(11) **EP 3 915 865 A1**
(43) Date of publication of application: **01.12.2021**
(21) Application number: 21176623.3
(22) Date of filing: 28.05.2021
(51) Int. Cl.: B63B 17/02

(54) **BOAT CANOPY**

(30) Priority: 29.05.2020 FI 20205564
(71) Applicant: Inhan Tehtaat Oy Ab, 21120 Raisio (FI)
(72) Inventor: Lehtola, Juha, 21120 Raisio (FI); Kanerva, Kalle, 21120 Raisio (FI); Juusti, Aleksi, 21120 Raisio (FI); Uro, Kai, 21120 Raisio (FI); Virtanen, Kari, 21120 Raisio (FI); Lahtonen, Janne, 21120 Raisio (FI)
(74) Representative: Kolster Oy Ab

(57) **Abstract**

The invention relates to a boat canopy (1) comprising a roof (5) and a first (7) and a second (8) front panel having a respective upper edge (13). The first (7) and second (8) front panels are attached to each other by a first seam (19). In order to provide a user friendly canopy the first (7) and second (8) front panels are provided with mating attachment parts attaching the first and second front panels to each other when the upper edge (13) of the first front panel (7) is detached from the roof (5) and the first (7) and second (8) front panels are folded at the first seam (19) to a panel package. The roof (5) is provided with a fastener attaching the panel package to the roof (5) when panel package is folded along the upper edge (13) of the second panel (8) to a position against an inner surface of the roof (5).

## Description

### BACKGROUND OF THE INVENTION

### FIELD OF THE INVENTION

This invention relates to boat canopy and more precisely to a canopy implemented as a cover on the boat that can be used during driving the boat, or alternatively, that can be removed before driving the boat.

### DESCRIPTION OF PRIOR ART

Previously there are known several different types of canopies for boats. A common problem for these known solutions is that mounting and removing the canopy to and from the boat is a slow and cumbersome process.

Removing a canopy usually involves opening of a number of attachment parts, which requires time. Once the canopy is ready for removal, a problem is storage of the removed canopy. Some boats may be provided with a storage space, but a common problem is that the canopy does not fit nicely into the storage unless it is folded in a precise configuration.

Additionally, similar problems exist once it is time to refit the canopy to the boat. First it needs to be taken out of the storage, then turned into the right position and finally attached with the attachment parts.

### SUMMARY OF THE INVENTION

An object of the present invention is to solve the above-mentioned drawback and to provide a canopy with improved user friendliness, as mounting and removing of the canopy can be done much easier and quicker than in previously known solutions. This object is achieved with a canopy as defined in claim 1.

When the canopy is implemented in such a way that the first and second front panels are provided with mating attachment parts attaching the first and second front panels to each other when the first and second front panels are folded at a first seam to a panel package, and when the roof is provided with a fastener for attaching the panel package to an inner surface of the roof, mounting and removal of the canopy becomes fast and easy.

Preferred embodiments of the invention are disclosed in the dependent claims.

### BRIEF DESCRIPTION OF DRAWINGS

In the following a boat canopy will be described in closer detail by way of example and with reference to the attached drawings, in which
Figure 1 illustrates a canopy attached to a boat,
Figure 2 illustrates the canopy of Figure 1,
Figure 3 is an inside view of the canopy of Figure 1,
Figure 4 is an outside view of the canopy of Figure 1, and
Figure 6 illustrates a panel package attached to the roof.

### DESCRIPTION OF AT LEAST ONE EMBODIMENT

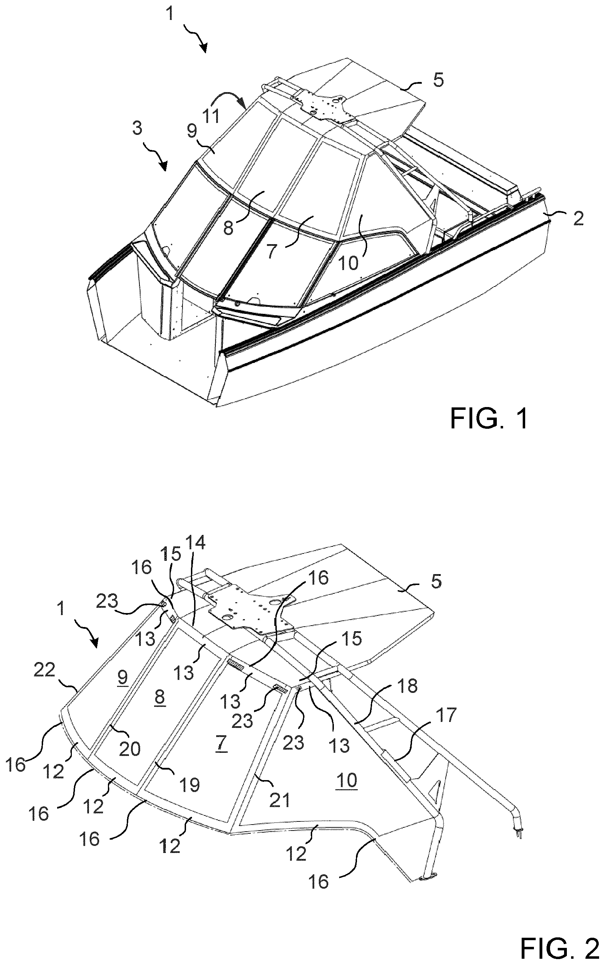

Figure 1 illustrates a canopy 1 attached to a boat 2 and Figure 2 illustrates the canopy 1 alone. In the example of Figure 1, the canopy 1 is attached to the boat 2 on top of a fixed window 3 (where a middle section of the window may work as a door), via the lower edges 12 of the panels included in the canopy 1. It should, however, be observed that in other implementations, the attachment to the boat may be carried out in other ways.

The canopy 1 is provided with a roof 5, which may be provided as a soft roof made of fabric, or alternatively as a hard roof made of plastic, for instance. In case the roof is a hard roof, it may be implemented as a separate part from the other parts of the canopy. A roof of fabric may be implemented as a single part including the other parts of the canopy or alternatively as a separate part from the other parts of the canopy.

In the illustrated example the canopy is provided with a first front panel 7, a second front panel 8, a third front panel 9, a first side panel 10 and a second side panel 11. The front panels 7, 8 and 9 are attached along their upper edges 13 to a front edge 14 of the roof 5, while the side panels 10 and 11 are attached along their upper edges 13 to the opposite side edges 15 of the roof 5.

In this example, it is assumed, that the upper edges 13 of the front and side panels are provided with zippers 16 attaching these upper edges to the edges 14 and 15 of the roof 5. The lower edges of the front 7, 8, 9 and side 10, 11 panels may also be provided with zippers 16 attaching the lower edges 12 to the boat, such as to the front window 3 of the boat. Side mounts 17 with snap attachments may be used to attach the back ends of the side panels 10, 11 to the boat via a Targa arch 18, for instance.

The panels 7-11 of the canopy 1 are attached in a side by side configuration along the edges 14 and 15 of the roof 5. Additionally, panels 7-11 are attached to each other at upwardly extending seams in such a way, that a first seam 19 attaches the first front panel 7 to the second front panel 8, a second seam 20 attaches the second front panel 8 to the third front panel 9, a third seam 21 attaches the first front panel 7 to the first side panel 10, and a fourth seam 22 attaches the third front panel 9 to the second side panel 11.

The seams 19 - 22 may simply be provided as areas in the material of the canopy 1 that have been folded in advance during manufacturing of the canopy. Due to this, an edge may have been formed in the material which indicates a fold location. In that way, during subsequent use of the canopy, the user may very easily find the correct location where the panels of the canopy should be folded in relation to each other during removal of the canopy. Such an edge may also give a hint about the direction into which the panels should be folded in relation to each other.

Alternatively, as illustrated by way of example in the figures, the front and side panels 7 - 11 may be manufactured of first material, such as of a transparent plastic material, while the seams 19 - 22 are formed of a second material, such as of a fabric of a woven material that are attaching the panels to each other. Also, in that case the material where the seams are located by have been pre-folded during manufacturing to provided edges for folding.

Finally, it is possible that at the location of one or more of the seams 19-22, zippers or other attachment means are utilized, such that one or more of the panels 7-11 may be detached from one or more of the other panels.

In order to facilitate that the panels 7 - 11 of the canopy 1 may be folded against each other to form a panel package 26, the front panels 7, 8 and 9 are provided with mating attachment parts 23 at such locations where the panels contact each other once folded into the panel package 26. In the illustrated example, it is by way of example assumed that these mating attachment parts 23 are located along the upper edges 13 of the panels, though in other implementations it may be possible to locate the attachment parts along the lower edges of the panels, or at the seams between the panels, for instance. One alternative is to provide both the inner and outer surfaces of the upper edges 13 with attachment parts 23. The attachment parts may be VELCRO fasteners (VELCRO® is a registered trademark of Velcro BVBA), for instance. In this connection the term "mating" refers to the fact that each pair of attachment parts contacting each other in the panel package have been such selected that they attach to each other.

In Figure 2 attachment parts 23 are located on the outer surface of the upper edge 13 of the first front panel 7 and the third front panel 9. Additionally, though not necessary in all implementations, in the illustrated example it is indicated that also the upper edges 13 of the side panels 10 and 11 are provided with attachment parts 23.

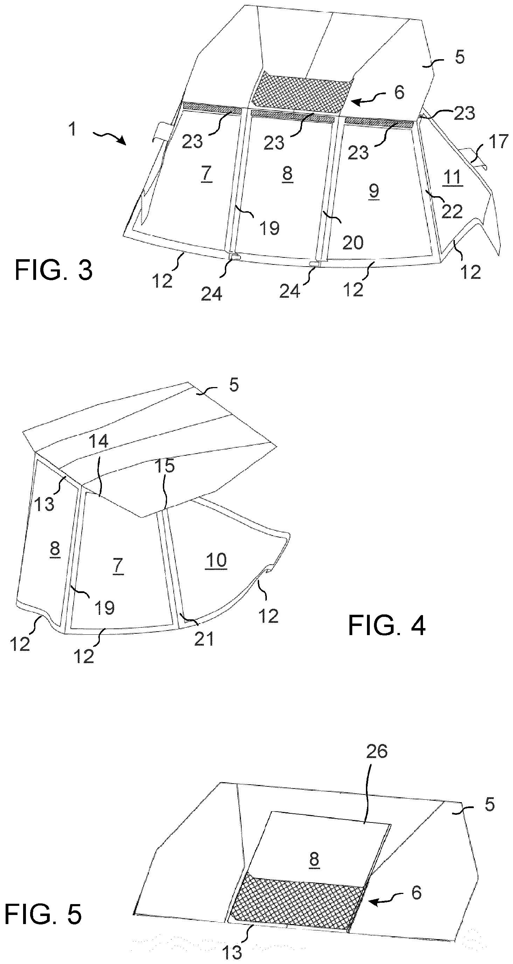

Figure 3 is an inside view of the canopy 1 of Figure 1. In Figure 1 the locations of the attachment parts 23 provided on the inside of the panels 7-11 are illustrated.

Figure 4 is an outside view of the canopy of Figure 1. In Figure 4 removal of the canopy 1 has begun. At this stage the lower edges 12 of the panels 7-11 have been detached from the boat, for instance, by unzipping the zippers 16 attaching the lower edges 12 to the window of the boat. To facilitate easy and quick unzipping, the zippers 16 may be provided with colorful and large pull tabs 24 which are easy to find and comfortable to grip also when the user is wearing gloves.

Additionally, in Figure 4 the side mounts 17 have been released from the Targa arch and the upper edges of the side panels 10 and 11 have been detached from the front edge 14 and side edges 15 of the roof 5. Consequently, at this stage the panels 7-11 are hanging from the roof 5 such that they are attached only to each other and to the front edge14 of the roof via the upper edge 13 of the second front panel 8. At this stage folding of the canopy 1 can begin in order to arrange the panels 7 - 11 into a panel package 26. The order in which the panels are folded into the panel package 26 may vary. In case the number on panels is as illustrated in the figures, the folding may be preformed in the following order, for instance:

In a first step the folding can begin by initially folding the first front panel 7 inwards along the first seam 19 until the attachment part 23 on the inner surface of the first front panel 7 attaches to the mating attachment part 23 on the inner surface of the second front panel 8.

In a second step, the first side panel 10 is folded along the third seam 21 such that the attachment part 23 on the outer surface of the first side panel 19 attaches to the mating attachment part 23 on the outer surface of the first front panel 10. It should, however, be observed that it is not necessary to have an attachment part on the outer surface of the first side panel 10, because in some implementations a sufficiently stable panel package 26 can be obtained also when the first side panel is simply folded without attaching by attachment parts.

In a third step, the third front panel 9 is folded inwards along the second seam 20 until the attachment part 23 on the inner surface of the third front panel 9 attaches to the mating attachment part 23 on the outer surface of the first front panel 7, and possibly, to the attachment part 23 on the inner surface of the first side panel 10, which is provided in this example, though not necessarily in all implementations. As is clear from the figures, the upper edge 13 of the first side panel 10 is much shorter than the upper edges 13 of the first front panel 7 and third front panel 9. Consequently, even though the first side panel 10 is located between the first front panel 7 and the third front panel 9, the mating attachment parts 23 of the first front panel 7 and third front panel 9 will be at least partly directly attached to each other.

In a fourth step, the second side panel 11 is folded along the fourth seam 22 such that the attachment part 23 (if provided) on the outer surface of the second side panel 11 attaches to the mating attachment part 23 on the outer surface of the third front panel 9. This finalizes the panel package 26, which now includes all panels 7-11 folded against each other in a compact and organized way.

Finally, the panel package 25 is folded inwards along the upper edge 13 of the second front panel 8 until the panel package 26 contacts the inner surface of the roof 5, as illustrated in Figure 6. At this stage a fastener 6 is utilized to suspend the panel package 26 from the roof. This fastener 6 may be implemented as a storage pocket of fabric or of a net for instance. One alternative is that such a storage pocket has a side edge with a zipper that can be opened to let the storage pocket and panel package swing down when the canopy 1 needs to be used again, and which can be zipped on in order to suspend the panel package 26 from the roof 5.

Instead of a fastener 6 in the form of the illustrated storage pocket, it is possible to utilize some other type of fastener, such as one or more straps which suspend the panel package 26 from the roof 5, for instance.

Figure 5 illustrates that the panels of the canopy will remain in a tidy and organized way in the panel package 26 with the outer surface of the second front panel 8 as the lowermost one, in case the folding is carried out as explained above.

Due to the fact that the locations of the attachment parts 23, and also the locations of the seams 19-22, have been carefully selected on the canopy 1, removal and also mounting of the canopy can be done very quickly and easily. The user simply needs to fit the mating attachment parts 23 against each other, which ensures that tidy folds are formed at the correctly located seams, such that the folding is very simple. Also unfolding is easy and quick due to the fact that the canopy will always be in the correct organized configuration when unfolding of the panel pack starts. In praxis it has turned out that the time needed for one person to remove or to mount the illustrated canopy 1 is less than 60 seconds.

In the illustrated example it has by way of example been assumed that the canopy 1 comprises three front panels 7, 8, 9 and two side panels 10, 11. This is, however, only by way of example. One alternative is that the canopy has only two front panels and no side panels at all. In that case the first front panel 7 and the second front panel 8 are folded as has previously been explained to a panel package, which is attached to the inner surface of the roof.

Naturally, also in case of a canopy with only two front panels also two side panels can be utilized. These side panels can be implemented as described above, and folded into the panel package as explained in connection with the illustrated example, with or without attachment parts.

It is to be understood that the above description and the accompanying figures are only intended to illustrate the present invention. It will be obvious to a person skilled in the art that the invention can be varied and modified without departing from the scope of the invention.

## Claims

1. A boat canopy (1) comprising:
a roof (5), and
a first (7) and a second (8) front panel having a respective upper edge (13), wherein
the first (7) and second (8) front panel are attached via the upper edges (13) in a side by side position to a front edge (14) of the roof (5), and
the first (7) and second (8) front panels are attached to each other by a first seam (19), **characterized in that**
the upper edge (13) of the first front panel (7) is detachably attached to the front edge (14) of the roof (5),
the first (7) and second (8) front panels are provided with mating attachment parts (23) attaching the first and second front panels to each other when the upper edge (13) of the first front panel (7) is detached from the roof (5) and the first (7) and second (8) front panels are folded at the first seam (19) to a panel package (26) where the inner or outer surfaces of the first (7) and second (8) front panels contact each other at the locations of the attachment parts (23), and
the roof (5) is provided with a fastener (6) attaching the panel package to the roof (5) when panel package is folded along the upper edge (13) of the second panel (8) to a position against an inner surface of the roof (5).

2. The boat canopy according to claim 1, wherein
the boat canopy (1) additionally comprises a third front panel (9) with an upper edge (13), the third front panel (9) is attached via the upper edge (13) to the front edge (14) of the roof (5) in a side by side position with the second front panel (8),
the second (8) and third front panels (9) are attached to each other by a second seam (20),
the upper edge (13) of the third front panel (9) is detachably attached to the front edge (14) of the roof, and
the first (7) and third panels (9) are provided with mating attachment parts (23) attaching the first (7) and third (9) front panels to each other when the upper edge (13) of the third front panel (9) is detached from the roof (5) and the third front panel (9) is added to the panel package by folding at the second seam (20) to a position where the inner or outer surfaces of the first (7) and third front (9) panels contact each other at the locations of the attachment parts (23).

3. The boat canopy according to claim 1 or 2, wherein
the boat canopy additionally comprises a first side panel (10) with an upper edge (13) detachably attached to a first side edge (15) of the roof (5) in a side by side position with the first front panel (7),
the first side panel (10) and the first front panel (7) are attached to each other by a third seam (21) via which the first side panel (10) can be folded and added to the panel package (26) by folding the first side panel to a position where the inner or outer surfaces of the first front panel (7) and first side panel (10) contact each other.

4. The boat canopy according to claim 3, wherein
the first side panel (10) and the first front panel (7) are provided with mating attachment parts (23) at locations where the first front panel (7) and first side panel (10) contact each other in the panel package (26), said mating attachment parts attaching the first front panel (7) to the first side panel (10).

5. The boat canopy according to one of claims 2 to 4, wherein
the boat canopy additionally comprises a second side panel (11) with an upper edge (13) detachably attached to a second side edge (15) of the roof (5) in a side by side position with the third front panel (9),
the second side panel (11) and the third front panel (9) are attached to each other by a fourth seam (22) via which the second side panel (11) can be folded and added to the panel package (26) by folding the second side panel to a position where the inner or outer surfaces of the third front panel (9) and second side panel (11) contact each other.

6. The boat canopy according to claim 5, wherein
the second side panel (11) and the third front panel (9) are provided with mating attachment parts (23) at locations where the third front panel (9) and second side panel (11) contact each other in the panel package, said mating attachment parts attaching the third front panel (9) to the second side panel (11).

7. The boat canopy according to one of claims 1 to 6, wherein the upper (13) and lower (12) edges of the front (7, 8, 9) and side panels (10,11) are provided with zippers (16) attaching the upper (13) and lower (12) edges to the roof (5) and to a boat (1), respectively.

8. The boat canopy according to one of claims 1 to 7, wherein the mating attachment parts (23) of the respective panels are provided along the upper edges (13) of the respective panels (7 - 11).

9. The boat canopy according to one of claims 1 to 8, wherein the fastener (6) provided to the roof is a storage pocket.

10. The boat canopy according to one of claims 1 to 9, wherein the roof (5) is a soft roof made of fabric.

11. The boat canopy according to one of claims 1 to 10, wherein the roof (5) is a hard roof made of plastic.
